# EUROPEAN PATENT SPECIFICATION

(11) **EP 2 832 637 B1**
(45) Date of publication and mention of the grant of the patent: **05.04.2017**
(21) Application number: 13178480.3
(22) Date of filing: 30.07.2013
(51) Int. Cl.: B64C 1/40

(54) **Vibro-acoustic reduction on-board an aircraft**
Vibroakustische Reduktion an Bord eines Flugzeugs
Réduction vibro-acoustique embarquée sur un aéronef

(43) Date of publication of application: 04.02.2015
(73) Proprietor: Airbus Operations GmbH, 21129 Hamburg (DE)
(72) Inventor: Scheel, Henning, 22763 Hamburg (DE); Grase, Karim, 22763 Hamburg (DE); Shone, Simon, 22609 Hamburg (DE)
(74) Representative: Kopf Westenberger Wachenhausen Patentanwälte PartG mbB

(56) References cited:
- US-A- 2 324 654
- US-A- 5 435 679
- US-A- 5 855 260
- US-A1- 2011 079 680

## Description

### FIELD OF THE INVENTION

The invention relates to a vibro-acoustic reduction system on-board an aircraft, to an aircraft, and to a method for reducing vibro-acoustic on-board an aircraft.

### BACKGROUND OF THE INVENTION

A major aspect in cabin design is related to the cabin acoustic design in order to decrease the cabin noise. Besides the noise generated by the passengers inside the cabin, noise is also emitted by engines, airflow boundary layers, and other systems for the operation of an aircraft. For cabin noise reduction, it is known to provide acoustic dampening and absorbing layers integrated in the cabin lining, for example. Further, passive dynamic vibration absorbers are installed on the fuselage structure to reduce vibration forces. Still further, also active noise controls are used, for example in form of loudspeakers o reduce cabin noise, such as described in DE 10 2004 041 214 B4. However, it has been shown that for an effective noise reduction, the knowledge of the exact aircraft configuration is required. Hence, the cabin noise reduction considerations must be integrated into a rather complex planning and designing procedure. Hence, modifications of the configuration result in completely new noise reduction considerations.

US 2011/0079680 A1 relates to an apparatus and method for attenuating noise and vibrations in a propeller aircraft, wherein a vibration absorber is mounted to the skin of the aircraft.

### SUMMARY OF THE INVENTION

There may be a need to provide a facilitated noise reduction in aircrafts.

The object of the invention is solved by the subject-matter of the independent claims, wherein further embodiments are incorporated in the dependent claims. It should be noted that the following described aspects of the invention apply also for the vibro-acoustic reduction system on-board an aircraft, for the aircraft, and for the method for reducing vibro-acoustic on-board an aircraft.

According to the invention, a vibro-acoustic reduction system on-board an aircraft is provided. The vibro-acoustic reduction system comprises a plurality of frame elements forming at least a part of a fuselage structure. The vibro-acoustic reduction system further comprises a plurality of vibration dampening components, and a plurality of coupling interfaces for attaching the vibration dampening components to the frame elements. The frame elements are provided with the plurality of coupling interfaces as pre-configured ready-for-use connection points for an optional attachment of one of the vibration dampening components in dependency of an actual demand. Each of the vibration dampening components is provided with a mounting interface. The vibration dampening components are attachable to the coupling interfaces of the frame elements with the mounting interfaces for different dampening measures scenarios.

As an advantage, a system is provided that is suitable for allowing different noise reduction configurations. Hence, a flexible and variable noise reduction for improving the noise situation in an aircraft cabin is provided.

The term "frame elements" relates to structural members of the fuselage. Since in an example, the fuselage is provided as a framework, to which an outer skin is attached, the term "frame element" is used. The "frame elements" are also referred to as framework elements structure elements, support elements, stiffener elements, frame parts or frame portions. However, it is noted that the term "frame" is used in aircraft construction to identify those structural members that ran circumferentially in a radial direction of the fuselage, in addition to the structural members that ran in longitudinal direction of the aircraft, which structural members are also referred to as "stringers". The "frames" are also referred to as ribs. Nevertheless, the term "frame elements" relates to both types of structural members, i.e. "frame elements" comprises frames and stringers. The "frame elements" also comprise other types of structural members that are used in the fuselage construction, such as third types of supporting of stiffening members.

The term "vibro-acoustic" relates to acoustic noise caused by mechanical vibrations. The vibrations are generated, for example, by the operation of an aircraft engine. In particular, vibrations are caused by a propeller engine.

The term "coupling interface" relates to attachment or connection points for mounting the vibration dampening components.

The term "pre-configured ready-for-use connection points" relates to a connection that is provided and adapted for the mount of one of the vibration dampening components. The connection points are prepared for the mount, but do not necessarily have a mounted vibration dampening component. Instead, the connection points are provided such that the mount of a vibration dampening component is also possible at a later stage. In an example, an "integrated add-on kit" is provided for flexible acoustic measures.

For example, a hybrid vibro-acoustic structure design is provided.

The coupling interfaces are allocated or disposed for different configurations.

The term "optional attachment" relates to the possibility of an attachment or mount, i.e. a predetermined attachment configuration of one or more vibration dampening components in order to improve dampening properties of the structure in response to various aircraft configurations.

The frame elements are also referred to as structural elements and relate to a primary structure of the fuselage. The frame elements are e.g. stringers, frames, and stiffeners. The frame elements are provided as preconfigured/pre-tailored/semi-customized primary coupling structure. The frame elements are provided with embedded interfaces for receiving dampening elements.

The coupling interfaces are provided as pre-set application points for the vibration dampening components.

According to an example, the coupling interfaces are provided on the frame elements in a distributed manner along at least a part of their length.

According to an example, the coupling interfaces are provided on the frame elements in a uniformly distributed manner.

As an advantage, the uniformly distributed coupling interfaces allow various arrangements of vibration dampening components for adapted and configured counter measures. For example, the uniformly distributed coupling interfaces allow both symmetric and asymmetric arrangements of vibration dampening components, i.e. different types of distribution patterns of the vibration dampening components. The uniformly distribution allows a high degree of adaptability, for example with a large number of coupling interfaces.

According to an example, the plurality of frame elements is configured for various vibration dampening components configurations comprising at least a maximum configuration, in which vibration dampening components are installed at all coupling interfaces, and a minimum configuration, in which no vibration dampening components are installed.

For example, a fuselage structure is provided and the fuselage structure is configured for the various vibration dampening components configurations.

According to an example, the fuselage structure is configured for all possible vibration dampening component configurations. The fuselage structure is designed, calculated, and certified for all possible vibration dampening component configurations.

The pre-configuration allows the integration of vibration dampening components during the complete manufacturing process, e.g. during the final assembly line.

In an example, the fuselage structure provides an integrated structure for various selectable vibro-acoustic configurations.

According to an example, a pre-designed measure catalogue, or activity catalogue, for acoustic dampening is provided, comprising a plurality of final acoustic concepts optimized for a specific aircraft configuration or engine configuration.

In an example, a number of different engine scenarios is provided for selection by the customer, for example an airline. For each engine configuration, a concept for providing improved acoustic dampening in relation to the vibro-acoustic noise is provided for selection by the customer. Since the structure is pre-configured for the different dampening scenarios, the selection, i.e. the decision for a specific dampening noise concept, can be done during the complete manufacturing procedure, in particular also after the mount of the fuselage structure. Since the scenarios are pre-configured, further test and approval procedures are not necessary.

According to an example, the fuselage structure is engineered at least for vibration dampening measures scenarios applicable for all approved engine configurations. According to an example, the fuselage structure is configured for retrofitting comprising the re-configuration of vibration dampening components.

As an effect, the vibro-acoustic reduction system is also applicable for amendments of the system at a later stage, for example in retrofitting.

According to an example, the vibration dampening components are comprising at least one of the group of distributed vibration absorbers, clamp-on intercostals attachable to a frame element via an engagement tooth and an engagement recess, clamp-on stiffeners attachable to a frame element by a clamp mechanism and a rivet engaging a prepared bore, stiffener strut framework with a plurality of tension struts connecting adjacent circumferential fuselage stiffeners, and active vibration control devices providing inducing or introducing reactive forces.

Hence, the vibro-acoustic reduction system offers a variety of measures or procedures for counter-acting the noise generated by vibration.

According to an example, the frame elements are provided with omega-shaped stiffener segments that are provided with a plurality of openings arranged on opposing sides of an omega cross-section as attachment openings for distributed vibration absorbers arranged inside the omega profile.

For example, the frame elements are provided with an omega-shaped stiffener cross-section throughout the circumferential length.

In another example, the frame elements are provided with a U-shaped stiffener cross-section.

According to the invention, also an aircraft is provided, comprising a fuselage structure, a wing configuration, an engine arrangement, and a cabin space accommodated in the fuselage structure. The fuselage structure is provided with a system for vibro-acoustic reduction according to one of the above-mentioned examples. Vibration caused by the operation of the engines is dampened by the system for vibro-acoustic reduction such that a noise level inside the cabin space is reduced.

As an advantage, the noise reduction can be optimized, while still allowing change in the configuration of the aircraft, which change can be responded to by altering the system for vibro-acoustic reduction.

According to an example, the engine arrangement comprises a propeller propulsion system.

In an example, the propeller propulsion system comprises two rear end mounted propeller engines. The propeller engines are provided as pusher-type propeller engines or as puller-type propeller engines. In a further example, the propeller propulsion system comprises wing mounted propeller engines. In a further example, the engine arrangement comprises a turbine propulsion system.

According to the invention, also a method for reducing vibro-acoustic on-board an aircraft is provided. The method comprises the following steps:
a) Providing an aircraft fuselage with a system for vibro-acoustic reduction on-board an aircraft, comprising a plurality of frame elements forming at least a part of a fuselage structure, a plurality of vibration dampening components, and a plurality of coupling interfaces for attaching the vibration dampening components to the frame elements. The frame elements are provided with the plurality of coupling interfaces as pre-configured ready-for-use connection points for an optional attachment of one of the vibration dampening components in dependency of an actual demand. Each of the vibration dampening components is provided with a mounting interface. The vibration dampening components are attachable to the coupling interfaces of the frame elements with the mounting interfaces.
b) Determining a dampening measure scenario.
c) Attaching the vibration dampening components to the coupling interfaces of the frame elements with the mounting interfaces according to the dampening measures scenario.

According to an example, before step b), it is provided a step of determining an aircraft configuration comprising an engine configuration.

According to an aspect of the invention, a system is provided, comprising a number of components for improving the acoustic situation on-board an aircraft, in particular inside a cabin. As a measure against vibro-acoustic noise on-board an aircraft, dampening elements are provided that are connectable to the structure via a number of pre-configured attachment points. The system considers different optimal dampening scenarios for different aircraft configurations. Thus, the decision for certain noise control measures can be made at a later stage, even after the assembly of the fuselage structure, since it is possible to provide the respective dampening elements configuration for the respective scenario.

These and other aspects of the invention will become apparent from and be elucidated with reference to the embodiments described hereinafter.

### BRIEF DESCRIPTION OF THE DRAWINGS

Exemplary embodiments of the invention will be described in the following with reference to the following drawings:
- Fig. 1A: shows a schematic overview of a vibro-acoustic reduction system with a plurality of frame elements in a perspective view;
- Fig. 1B: shows a perspective sectional view of a rear section of an aircraft as a further example for the plurality of frame elements;
- Fig. 1C: shows a perspective section through a centre part of a fuselage structure as an example for the plurality of frame elements;
- Fig. 1D: shows an example of a frame element;
- Fig. 1E: shows an example of a vibration dampening component provided with a mounting interface;
- Fig. 2A: shows a section through a clamp-on stiffener as an example of the vibration dampening component;
- Fig. 2B: shows a clamp-on intercostal as a further example of the vibration dampening components;
- Fig. 2C: shows an example of an integration of a distributed vibration absorber in a perspective view;
- Fig. 2D: shows a stiffener strut framework with a plurality of tension struts connecting adjacent circumferential fuselage stiffeners in a perspective view;
- Fig. 2E: shows an active vibration control device providing reactive forces as a further example of the vibration dampening components;
- Fig. 3A: shows a cross-section through an omega-shaped stiffener segment, with a distributed vibration absorber arranged inside the omega profile;
- Fig. 3B: shows a perspective view of the omega-shaped stiffener segment of Fig. 3A;
- Fig. 4A: shows a top view of an aircraft with a propeller propulsion system comprising two rear end mounted propeller engines;
- Fig. 4B: shows a top view of an aircraft with wing mounted propeller engines;
- Fig. 5A: shows an example of a method for reducing vibro-acoustic on-board an aircraft; and
- Fig. 5B: shows a further example of the method of Fig. 5A.

### DETAILED DESCRIPTION OF EMBODIMENTS

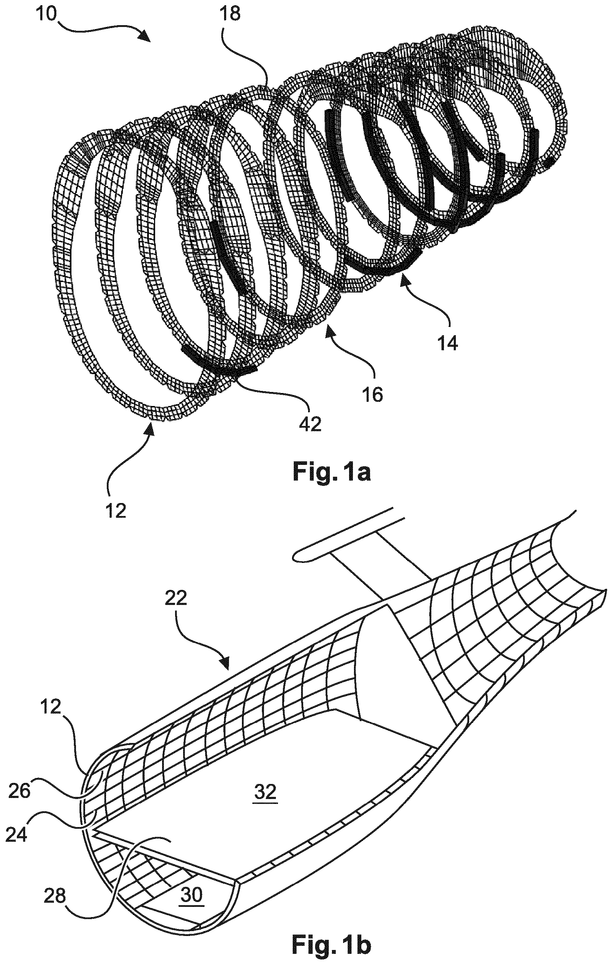

Fig. 1A shows an overview of a vibro-acoustic reduction system 10 on-board an aircraft.

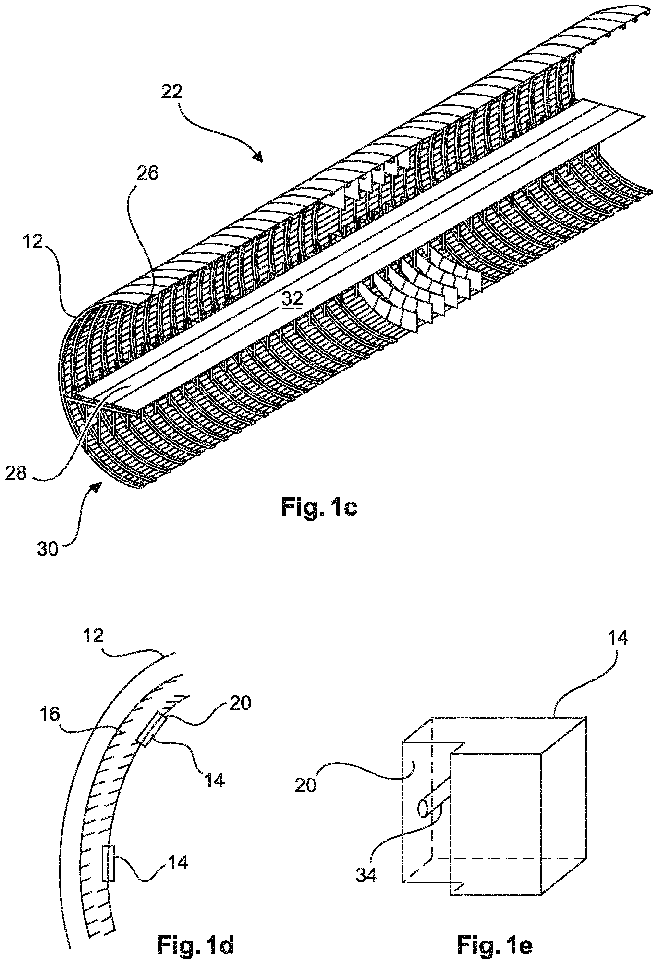

The vibro-acoustic reduction system 10, in the following also referred to as the system 10, comprises a plurality of frame elements 12 forming at least a part of a fuselage structure. For example, the frame elements 12 comprise a rear part of a fuselage structure with the frame elements having a decreasing size, for example decreasing in the rearwards direction of the aircraft, in Fig. 1A from left to right. Further, a plurality of vibration dampening components 14 is provided, and a plurality of coupling interfaces 16 for attaching the vibration dampening components 14 to the frame elements 12. The coupling interfaces 16 will be discussed also in relation with the following figures below. The frame elements 12 are provided with the plurality of coupling interfaces 16 as pre-configured ready-for-use connection points 18 for an optional attachment of one of the vibration dampening components in dependency of an actual demand. Each of the vibration dampening components 14 is provided with a mounting interface 20 (see also Fig. 1E). The vibration dampening components are attachable to the coupling interfaces 16 of the frame elements 12 with the mounting interfaces 20 for different dampening measures scenarios.

Fig. 1B shows a further example of a rear part of an aircraft in form of a perspective sectional view. The frame elements 12 provide a fuselage structure 22 having stringer elements 24 connecting the frame elements 12. Further, an outer skin 26 is also indicated. Inside the fuselage structure 22, a floor element 28 is provided separating a cargo compartment area 30 from a cabin space 32. It must be noted that a seating arrangement and also interior structure of the cabin is provided, but not further shown.

Fig. 1C shows a section of the fuselage structure 22 in the middle or centre portion.

Fig. 1D shows one of the frame elements 12 with two of the vibration dampening components attached to the coupling interfaces 16 of the frame elements 12 with the mounting interface 20.

Fig. 1E shows a schematic view of one of the vibration dampening components 14 with an indicated mounting interface 20 in form of a recess for attaching to a respective form of the coupling interface 16 on the frame element. Further, a through-hole 34 indicates the possibility for fixation of the vibration dampening component to the frame element, as a part of the mounting interface 20.

As an option, the coupling interfaces 16 are provided on the frame elements 12 in a uniformly distributed manner along at least a part of their length, as also indicated in Fig. 1A. In a further example (not shown), the distribution is irregularly, but still allowing a large variety of arrangements of vibration dampening components.

According to a further example, a plurality of frame elements 12 is configured for various vibration dampening components configurations comprising at least a maximum configuration, in which vibration dampening components are installed at all coupling interfaces 16, and a minimum configuration, in which no vibration dampening components are installed. The example in Fig. 1A shows an intermediate configuration with only a few of the vibration dampening components installed at a few of the coupling interfaces.

In a further example, as an option, the fuselage structure is configured for all vibration dampening component configurations, wherein the fuselage structure is designed, calculated, and certified for all possible vibration dampening component configurations.

According to a further example, as indicated in Figs. 1B and 1C, a pre-designed measure catalogue for acoustic dampening is provided, comprising a plurality of final acoustic concepts optimized for a specific aircraft configuration or engine configuration.

The fuselage structure is engineered at least for vibration dampening measures scenarios applicable for all approved engine configurations.

The fuselage structure is configured for retrofitting, comprising the re-configuration of vibration dampening components.

For example, the vibration dampening components, which are also referred to as vibration dampening elements, are provided as distributed vibration absorbers 42.

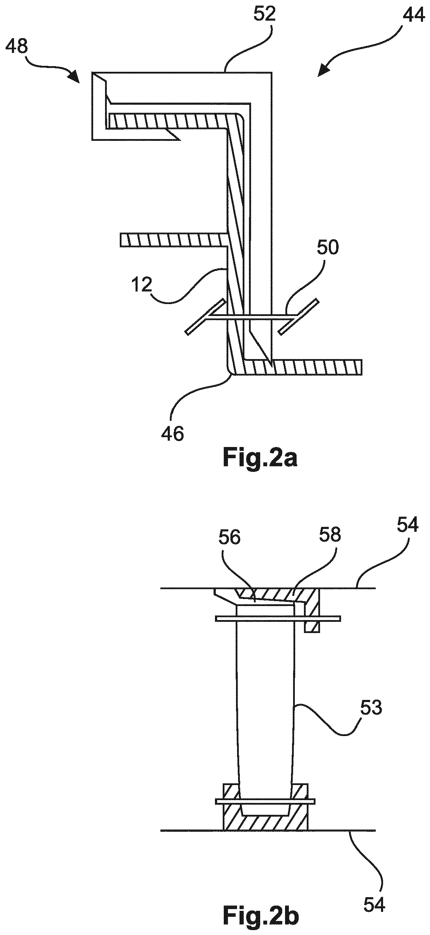

Fig. 2A shows an example of the vibration dampening components 14 as clamp-on stiffeners 44 attachable to a frame element, indicated with reference numeral 46 in Fig. 2A, by a clamp mechanism 48 and a rivet 50, or other suitable fixation member such as a screw in combination with glue, engaging a prepared bore of the frame element 46. The clamp-on stiffener further comprises a stiffener profile 52, connected with the clamp mechanism 48.

Fig. 2B shows a clamp-on intercostal 53 as a further example of the vibration dampening component 14. The clamp-on intercostal 53 is attachable to two adjacent frame elements, indicated with reference numeral 54 in Fig. 2B, via an engagement tooth 56 and a respective engagement recess 58.

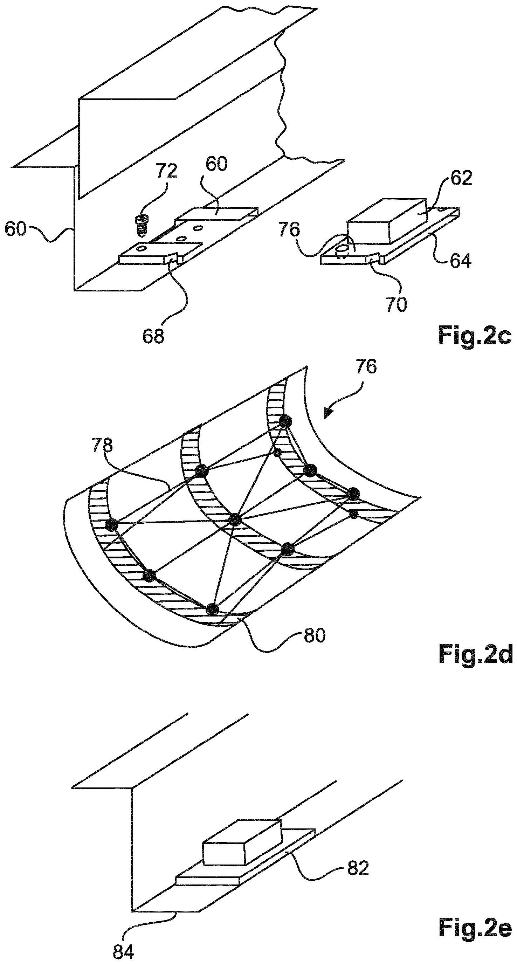

Fig. 2C shows a further example of the vibration dampening component 14. In a perspective illustration, a frame element 60 is shown. A distributed vibration absorber 62 is connected to a base plate 64. The base plate 64 is insertable into a base mount 66, provided with a snap lock mechanism 68 temporarily engaging with a respective recess 70 on one of the sides of the base plate 64. For fixation, a fixation means 72 for example a screw or rivet, is insertable into a hole 74, thus engaging with a bore 76 of the base plate 64, when the base plate 64 is inserted into the base mechanism 66.

Fig. 2D shows a further example of the vibration dampening component 14, comprising a stiffener strut framework 76 with a plurality of tension struts 78 connecting adjacent circumferential fuselage stiffeners or frame elements 80.

Fig. 2E shows a further example of the vibration dampening component 14 in form of active vibration control devices 82 providing reactive forces. For example, the active vibration control device 82 is connected to a stringer or other frame element 84.

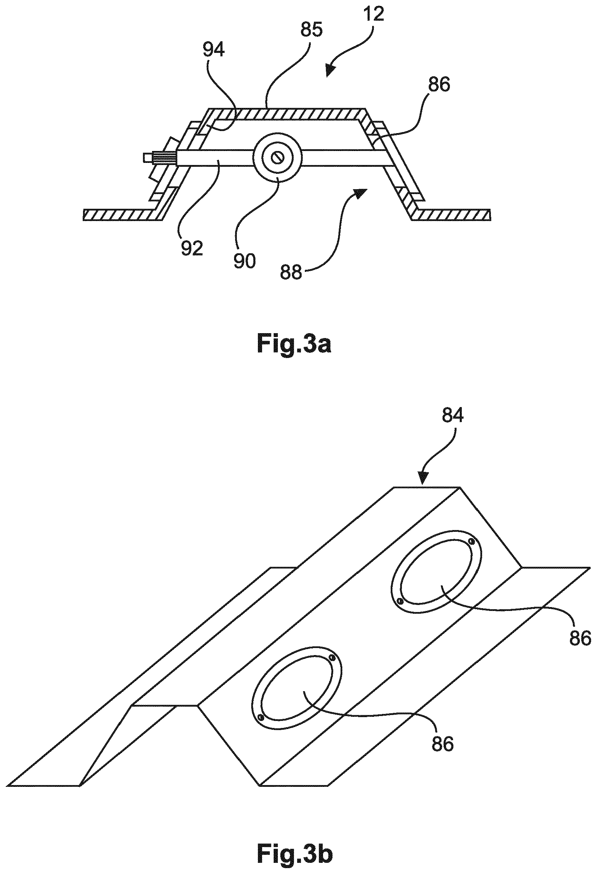

Fig. 3A shows a cross-section through one of the frame elements 12, wherein the frame element 12 is provided with omega-shaped stiffener segments 85 that are provided with a plurality of openings 86 arranged on opposing sides of an omega cross-section 88 as attachment openings for distributed vibration absorbers arranged inside the omega profile.

In Fig. 3A, a distributed vibration absorber 90 is mounted on a linear centre hold 92, which linear centre hold 92 is inserted through the openings 86 and mounted to the surrounding edge portions 94 of the opening 86.

Fig. 3B shows a perspective view of the omega-shaped stiffener segment 85 of Fig. 3A. As can be seen, two of the openings 68 are provided.

In an example, not further shown, the attachment possibilities for the vibration dampening components 14 are provided in a uniformly distributed manner.

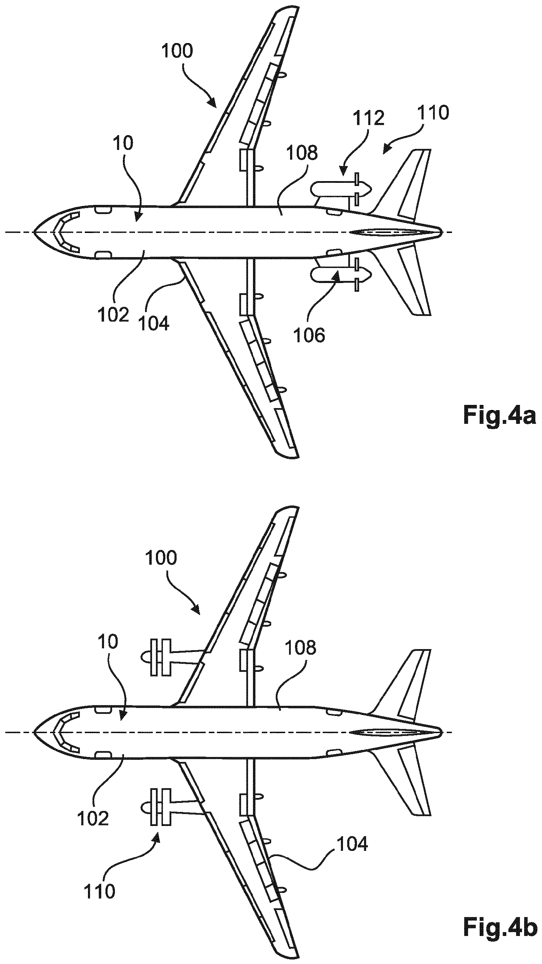

Fig. 4A shows a top view of an aircraft 100 comprising a fuselage structure 102, a wing configuration 104, an engine arrangement 106, and a cabin space 108 accommodated in the fuselage structure 102.

The fuselage structure 102 is provided with a system 10 for vibro-acoustic reduction according to one of the above-mentioned examples. The vibration caused by the operation of the engines is dampened by the system 10 such that a noise level inside the cabin space is reduced.

For example, the engine arrangement 106 comprises a propeller propulsion system 110. In the example shown in Fig. 4A, the propeller propulsion system 110 comprises two rear end mounted propeller engines 112 that are provided as pusher-type propeller engines or as puller-type propeller engines. In Fig. 4A, the propeller engines are provided as pusher-type propeller engines.

Fig. 4B shows a top view of a further example of the aircraft 100, with the difference that the propeller propulsion system 110 is provided as wing mounted propeller engines in form of the puller-type.

In a further example, although not further shown, turbine engines are provided for the engine arrangement.

In the example of Fig. 4B, the vibration caused by the wing mounted propellers is dampened by the vibro-acoustic reduction system 10 with a particular arrangement of the vibration dampening components in the area close to the mounting of the wing to the fuselage structure.

In Fig. 4A, the vibration caused by the rear mounted propellers enters the fuselage structure as vibration forces in the rear part of the fuselage. Thus, the vibro-acoustic reduction system 10 is provided with particular counter-measures in this section or adjacent sections of the aircraft.

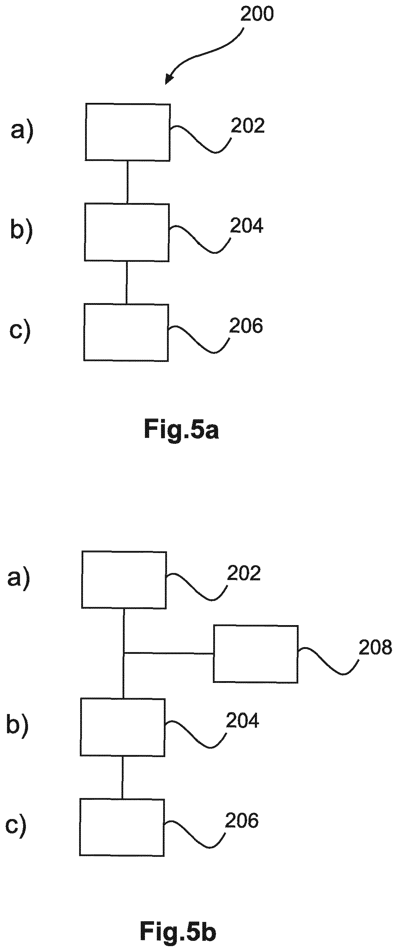

Fig. 5A shows an example of a method 200 for reducing vibro-acoustic on-board an aircraft. The method 200 comprises the following steps:
- In a first step 202, an aircraft fuselage is provided with a system for vibro-acoustic reduction on-board an aircraft, comprising a plurality of frame elements forming at least a part of a fuselage structure, a plurality of vibration dampening components, and a plurality of coupling interfaces for attaching the vibration dampening components to the frame elements. The frame elements are provided with the plurality of coupling interfaces as pre-configured ready-for-use connection points for an optional attachment of one of the vibration dampening components in dependency of an actual demand. Each of the vibration dampening components is provided with a mounting interface. The vibration dampening components are attachable to the coupling interfaces of the frame elements with the mounting interfaces.
- In a second step 204, a dampening measures scenario is determined.
- In a third step 206, the vibration dampening components are attached to the coupling interfaces of the frame elements with the mounting interfaces according to the dampening measures scenario.

The first step 202 is also referred to as step a), the second step 204 as step b), and the third step 206 as step c).

Fig. 5B shows a further example, wherein before step b), it is provided a step of determining 208 an aircraft configuration comprising an engine configuration.

It has to be noted that embodiments of the invention are described with reference to different subject-matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single device or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A vibro-acoustic reduction system (10) on-board an aircraft, comprising:
- a plurality of frame elements (12) forming at least a part of a fuselage structure;
- a plurality of vibration dampening components (14); and
- a plurality of coupling interfaces (16) for attaching the vibration dampening components to the frame elements;
wherein the frame elements are provided with the plurality of coupling interfaces as pre-configured ready-for-use connection points (18) for an optional attachment of one of the vibration dampening components in dependency of an actual demand;
wherein each of the vibration dampening components is provided with a mounting interface (20); and
wherein the vibration dampening components are attachable to the coupling interfaces of the frame elements with the mounting interfaces for different dampening measures scenarios.

2. Vibro-acoustic reduction system according to claim 1, wherein the coupling interfaces are provided on the frame elements in distributed manner along at least a part of their length.

3. Vibro-acoustic reduction system according to claim 2, wherein the coupling interfaces are provided on the frame elements in a uniformly distributed manner.

4. Vibro-acoustic reduction system according to claim 1, 2 or 3, wherein the plurality of frame elements is configured for various vibration dampening components configurations comprising at least a maximum configuration, in which vibration dampening components are installed at all coupling interfaces, and a minimum configuration, in which no vibration dampening components are installed.

5. Vibro-acoustic reduction system according to one of the preceding claims, wherein a pre-designed measure catalogue for acoustic dampening is provided comprising a plurality of final acoustic concepts optimized for specific aircraft configuration or engine configuration.

6. Vibro-acoustic reduction system according to one of the preceding claims, wherein the fuselage structure is engineered at least for vibration dampening measures scenarios applicable for all approved engine configurations.

7. Vibro-acoustic reduction system according to one of the preceding claims, wherein the fuselage structure is configured for retrofitting comprising the reconfiguration of vibration dampening components.

8. Vibro-acoustic reduction system according to one of the preceding claims, wherein the vibration dampening components are comprising at least one of the group of:
i) distributed vibration absorbers (42);
ii) clamp-on intercostals (53) attachable to a frame element via an engagement tooth (56) and an engagement recess (58);
iii) clamp-on stiffeners (44) attachable to a frame element by a clamp mechanism (48) and a fixation member (50) engaging a prepared bore;
iv) stiffener strut framework (76) with a plurality of tension struts (78) connecting adjacent circumferential fuselage stiffeners; and
v) active vibration control devices (82).

9. Vibro-acoustic reduction system according to one of the preceding claims, wherein the frame elements are provided with omega shaped stiffener segments (85) that are provided with a plurality of openings (86) arranged on opposing sides of an omega cross-section (88) as attachment openings for distributed vibration absorbers arranged inside the omega profile.

10. An aircraft (100) comprising:
- a fuselage structure (102);
- a wing configuration (104);
- an engine arrangement (106); and
- a cabin space (108) accommodated in the fuselage structure;
wherein the fuselage structure is provided with a system (10) for vibro-acoustic reduction according to one of the preceding claims; and
wherein vibration caused by the operation of the engines is dampened by the system for vibro-acoustic reduction such that a noise level inside the cabin space is reduced.

11. Aircraft according to the preceding claim, wherein the engine arrangement comprises a propeller propulsion system (110).

12. A method (200) for reducing vibro-acoustic on-board an aircraft, comprising the following steps:
a) providing (202) an aircraft fuselage with a system for vibro-acoustic reduction on-board an aircraft, comprising a plurality of frame elements forming at least a part of a fuselage structure, a plurality of vibration dampening components, and a plurality of coupling interfaces for attaching the vibration dampening components to the frame elements; wherein the frame elements are provided with the plurality of coupling interfaces as pre-configured ready-for-use connection points for an optional attachment of one of the vibration dampening components in dependency of an actual demand; wherein each of the vibration dampening components is provided with a mounting interface; and wherein the vibration dampening components are attachable to the coupling interfaces of the frame elements with the mounting interfaces;
b) determining (204) a dampening measures scenario; and
c) attaching (206) the vibration dampening components to the coupling interfaces of the frame elements with the mounting interfaces according to the dampening measures scenario.

13. Method according to the preceding claim,
wherein before step b) it is provided a step of determining (208) an aircraft configuration comprising an engine configuration.

## Patentansprüche

1. Ein vibro-akustisches Reduktionssystem (10) an Bord eines Luftfahrzeugs, umfassend:
- eine Vielzahl von Rahmenelementen (12), die wenigstens einen Teil einer Rumpfstruktur bilden;
- eine Vielzahl von Vibrationsdämpfungskomponenten (14); und
- eine Vielzahl von Kopplungsschnittstellen (16) zum Befestigen der Vibrationsdämpfungskomponenten an den Rahmenelementen;
wobei die Rahmenelemente mit der Vielzahl der Kopplungsschnittstellen als vorgefertigte einsatzbereite Verbindungspunkte (18) für ein optionales Befestigen von einer der Vibrationsdämpfungskomponenten in Abhängigkeit eines tatsächlichen Bedarfs vorgesehen sind;
wobei jeder der Vibrationsdämpfungskomponenten mit einer Befestigungsschnittstelle (20) vorgesehen ist; und
wobei die Vibrationsdämpfungskomponenten an den Kopplungsschnittstellen der Rahmenelemente mit den Befestigungsschnittstelle befestigbar sind für verschiedene Szenarien von Dämpfungsmaßnahmen.

2. Vibro-akustisches Reduktionssystem nach Anspruch 1, wobei die Kopplungsschnittstellen an den Rahmenelementen wenigstens entlang einem Teil ihrer Länge in einer verteilten Weise angeordnet sind.

3. Vibro-akustisches Reduktionssystem nach Anspruch 2, wobei die Kopplungsschnittstellen an den Rahmenelementen in einer gleichmäßig verteilten Weise angeordnet sind.

4. Vibro-akustisches Reduktionssystem nach Anspruch 1, 2 oder 3, wobei die Vielzahl der Rahmenelemente für verschiedene Konfigurationen von Vibrationsdämpfungskomponenten ausgebildet ist, umfassend wenigstens eine maximale Konfiguration, in welcher Vibrationsdämpfungskomponenten an allen Kopplungsschnittstellen installiert sind, und eine minimale Konfiguration, in welcher keine Vibrationsdämpfungskomponente installiert sind.

5. Vibro-akustisches Reduktionssystem nach Anspruch 1, wobei ein vorab aufgesetzter Maßnahmen Katalog für akustisches Dämpfen vorgesehen ist, der eine Vielzahl von akustischen Konzepten aufweist, die für spezifische Luftfahrzeugkonfigurationen oder Motorkonfigurationen optimiert sind.

6. Vibro-akustisches Reduktionssystem nach einem der vorhergehenden Ansprüche, wobei die Rumpfstruktur wenigstens für Vibrationsdämpfungsmaßnahmenszenarios entwickelt ist, die für alle zugelassenen Motorkonfigurationen anwendbar sind.

7. Vibro-akustisches Reduktionssystem nach einem der vorhergehenden Ansprüche, wobei die Rumpfstruktur ausgebildet ist zum Retrofitting, umfassend die Re-Konfiguration von Vibrationsdämpfungskomponenten.

8. Vibro-akustisches Reduktionssystem nach einem der vorhergehenden Ansprüche, wobei die Vibrationsdämpfungskomponenten wenigstens eines umfassen aus der Gruppe von:
i) verteilte Vibrationsabsorber (42);
ii) aufklemmbare Zwischenstücke (53), die an einem Rahmenelement mit einem Verbindungszahn (56) und einer Eingreifvertiefung (58);
iii) aufklemmbare Versteifungsstücke (44), die an einem Rahmenelement durch einen Klemmmechanismus (48) und ein Fixiermittel (50) befestigbar sind, das in eine vorgesehene Bohrung eingreift;
iv) Aussteifungsfachwerk (76) mit einer Vielzahl von Zugstreben (78), die angrenzende Rumpfstrukturaussteifungen verbinden; und
v) aktive Vibrationskontrollvorrichtungen (82).

9. Vibro-akustisches Reduktionssystem nach einem der vorhergehenden Ansprüche, wobei die Rahmenelemente mit Omega-förmigen Aussteifungssegmenten (85) versehen sind, die mit einer Vielzahl von Öffnungen (86) versehen sind, die an gegenüberliegenden Seiten eines Omega-Querschnitts (88) als Befestigungsöffnungen für verteilte Vibrationsabsorber innerhalb des Omega-Profils angeordnet sind.

10. Ein Luftfahrzeug (100), aufweisend:
- eine Rumpfstruktur (102);
- eine Flügelkonfiguration (104);
- eine Motoranordnung (106); und
- eine Kabinenbereiche (10), der in der Rumpfstruktur untergebracht ist;
wobei die Rumpfstruktur mit einem System (10) zur vibro-akustischen Reduktion nach einem der vorhergehenden Ansprüche versehen ist; und
wobei Vibration, die durch den Betrieb der Motoren hervorgerufen wird, durch das System zur vibro-akustischen Reduktion derart gedämpft wird, dass der Geräuschpegel innerhalb des Kabinenbereichs reduziert ist.

11. Luftfahrzeug nach dem vorhergehenden Anspruch, wobei die Motorenanordnung ein Propeller-Antriebssystem (110) aufweist.

12. Ein Verfahren (200) zum Reduzieren von Vibro-Akustik an Bord eines Luftfahrzeugs, umfassend die folgenden Schritte:
a) Vorsehen (202) eines Luftfahrzeugrumpfes mit einem System zur vibro-akustischen Reduktion an Bord eines Luftfahrzeugs, aufweisend eine Vielzahl von Rahmenelementen, die wenigstens einen Teil einer Rumpfstruktur bilden, eine Vielzahl von Vibrationsdämpfungskomponenten und eine Vielzahl von Kopplungsschnittstellen zum Befestigen der Vibrationsdämpfungskomponenten an den Rahmenelementen; wobei die Rahmenelemente mit der Vielzahl der Kopplungsschnittstellen als vorgefertigte einsatzbereite Verbindungspunkte für ein optionales Befestigen von einer der Vibrationsdämpfungskomponenten in Abhängigkeit eines tatsächlichen Bedarfs vorgesehen sind; wobei jeder der Vibrationsdämpfungskomponenten mit einer Befestigungsschnittstelle vorgesehen ist; und wobei die Vibrationsdämpfungskomponenten an den Kopplungsschnittstellen der Rahmenelemente mit den Befestigungsschnittstelle befestigbar sind;
b) Bestimmen (204) eines Dämpfungsmaßnahmen-Szenarios; und
c) Befestigen (206) der Vibrationsdämpfungskomponenten an den Kopplungsschnittstellen der Rahmenelemente mit den Befestigungsschnittstelle gemäß dem Dämpfungsmaßnahmen-Szenario.

13. Verfahren nach dem vorhergehenden Anspruch,
wobei vor Schritt b) ein Schritt von Bestimmen (208) einer Luftfahrzeugkonfiguration aufweisend eine Motorkonfiguration vorgesehen ist.

## Revendications

1. Système de réduction vibroacoustique (10) à bord d'un aéronef, comprenant :
- une pluralité d'éléments de cadre (12) formant au moins une partie de structure de fuselage ;
- une pluralité de pièces d'amortissement des vibrations (14) ; et
- une pluralité d'interfaces d'accouplement (16) destinées à fixer les pièces d'amortissement des vibrations aux éléments de cadre ;
dans lequel les éléments de cadre sont pourvus de la pluralité d'interfaces d'accouplement en tant que points de raccordement préalablement configurés et prêts à l'emploi (18), destinés à la fixation éventuelle de l'une des pièces d'amortissement des vibrations, en fonction d'une demande réelle ;
dans lequel chacune des pièces d'amortissement des vibrations est pourvue d'une interface de montage (20) ; et
dans lequel les pièces d'amortissement des vibrations peuvent être fixées aux interfaces d'accouplement des éléments de cadre à l'aide des interfaces de montage selon différents scénarios de mesures d'amortissement.

2. Système de réduction vibroacoustique selon la revendication 1, dans lequel les interfaces d'accouplement sont placées sur les éléments de cadre, de façon à être réparties sur une partie au moins de leur longueur.

3. Système de réduction vibroacoustique selon la revendication 2, dans lequel les interfaces d'accouplement sont placées sur les éléments de cadre, de façon à être réparties uniformément.

4. Système de réduction vibroacoustique selon la revendication 1, 2 ou 3, dans lequel la pluralité d'éléments de cadre est configurée pour diverses configurations de pièces d'amortissement des vibrations, comprenant au moins une configuration maximale dans laquelle des pièces d'amortissement des vibrations sont installées à toutes les interfaces d'accouplement, et une configuration minimale dans laquelle aucune pièce d'amortissement des vibrations n'est installée.

5. Système de réduction vibroacoustique selon l'une des revendications précédentes, dans lequel il est fait appel à un catalogue de mesures prédéfinies d'amortissement acoustique, comprenant une pluralité de concepts acoustiques finaux optimisés pour une configuration spécifique d'aéronef ou de moteurs.

6. Système de réduction vibroacoustique selon l'une des revendications précédentes, dans lequel la structure de fuselage est mise au point au moins pour des scénarios de mesures d'amortissement des vibrations applicables à toutes les configurations de moteurs approuvées.

7. Système de réduction vibroacoustique selon l'une des revendications précédentes, dans lequel la structure de fuselage est configurée pour une rénovation comprenant la reconfiguration de pièces d'amortissement des vibrations.

8. Système de réduction vibroacoustique selon l'une des revendications précédentes, dans lequel les pièces d'amortissement des vibrations comprennent au moins un type de pièces parmi le groupe constitué de :
i) amortisseurs de vibrations répartis (42) ;
ii) lisses à fixation par serrage (53) pouvant être fixées à un élément de cadre par l'intermédiaire d'une dent de mise en prise (56) ou d'un évidement de mise en prise (58) ;
iii) raidisseurs à fixation par serrage (44) pouvant être fixés à un élément de cadre au moyen d'un mécanisme de serrage (48) et d'un organe de fixation (50) entrant en prise avec un alésage préparé ;
iv) ossature de contrefiches de raidisseurs (76) dotée d'une pluralité de contrefiches de traction (78) reliant des raidisseurs périphériques voisins de fuselage ; et
v) dispositifs antivibrations actifs (82).

9. Système de réduction vibroacoustique selon l'une des revendications précédentes, dans lequel les éléments de cadre sont pourvus de segments de raidisseurs en oméga (85), qui sont pourvus d'une pluralité d'ouvertures (86) ménagées sur des côtés opposés d'une section transversale en oméga (88) en tant qu'ouvertures de fixation destinées à des absorbeurs de vibrations répartis, disposés à l'intérieur du profil en oméga.

10. Aéronef (100) comprenant :
- une structure de fuselage (102) ;
- une configuration d'aile (104) ;
- un agencement de moteurs (106) ; et
- un espace cabine (108) logé dans la structure de fuselage ;
dans lequel la structure de fuselage est pourvue d'un système (10) destiné à la réduction vibroacoustique selon l'une des revendications précédentes ; et
dans lequel la vibration causée par le fonctionnement des moteurs est amortie par le système destiné à la réduction vibroacoustique, de manière qu'un niveau de bruit à l'intérieur de l'espace cabine soit réduit.

11. Aéronef selon la revendication précédente, dans lequel l'agencement de moteurs comprend un système propulsif à hélice (110).

12. Procédé (200) de réduction vibroacoustique à bord d'un aéronef, comprenant les étapes suivantes :
a) utiliser (202) un fuselage d'aéronef doté d'un système destiné à la réduction vibroacoustique à bord d'un aéronef, comprenant une pluralité d'éléments de cadre formant au moins une partie de structure de fuselage, une pluralité de pièces d'amortissement des vibrations, et une pluralité d'interfaces d'accouplement destinées à fixer les pièces d'amortissement des vibrations aux éléments de cadre ; dans lequel les éléments de cadre sont pourvus de la pluralité d'interfaces d'accouplement en tant que points de raccordement préalablement configurés et prêts à l'emploi en vue de la fixation éventuelle de l'une des pièces d'amortissement des vibrations, en fonction d'une demande réelle ; dans lequel chacune des pièces d'amortissement des vibrations est pourvue d'une interface de montage ; et dans lequel les pièces d'amortissement des vibrations peuvent être fixées aux interfaces d'accouplement des éléments de cadre à l'aide des interfaces de montage ;
b) déterminer (204) un scénario de mesures d'amortissement ; et
c) fixer (206) les pièces d'amortissement des vibrations aux interfaces d'accouplement des éléments de cadre, à l'aide des interfaces de montage en fonction du scénario de mesures d'amortissement.

13. Procédé selon la revendication précédente,
dans lequel avant l'étape b), il est fait appel à une étape consistant à déterminer (208) une configuration d'aéronef comprenant une configuration de moteurs.
